Europäisches Patentamt

European Patent Office

Office européen des brevets

(19)

(11) Veröffentlichungsnummer: **0 011 708**
**B1**

# EUROPÄISCHE PATENTSCHRIFT

(45) Veröffentlichungstag der Patentschrift:
14.10.81

(21) Anmeldenummer: **79104110.6**

(22) Anmeldetag: **23.10.79**

(51) Int. Cl.³: **G 01 B 11/30**, G 01 B 11/24

(54) **Verfahren und Vorrichtung zur Messung der Ebenheit, der Rauhigkeit oder des Krümmungsradius einer Messfläche.**

(30) Priorität: **30.11.78 DE 2851750**

(43) Veröffentlichungstag der Anmeldung:
**11.06.80 Patentblatt 80/12**

(45) Bekanntmachung des Hinweises auf die Patenterteilung:
**14.10.81 Patentblatt 81/41**

(84) Benannte Vertragsstaaten:
**AT DE FR GB**

(56) Entgegenhaltungen:
**DE-A1-2 658 399**
**DE-B1-2 622 787**

(73) Patentinhaber: **International Business Machines Corporation, Armonk, N.Y. 10504 (US)**

(72) Erfinder: **Makosch, Günter, Stuttgarter Strasse 40, D-7032 Sindelfingen 6 (DE)**
Erfinder: **Solf, Bernhard, Balinger Strasse 5, D-7032 Sindelfingen 6 (DE)**

(74) Vertreter: **Teufel, Fritz, Dipl.-Phys., Schönaicher Strasse 220, D-7030 Böblingen (DE)**

## Verfahren und Vorrichtung zur Messung der Ebenheit, der Rauhigkeit oder des Krümmungsradius einer Meßfläche

Die Erfindung betrifft ein Verfahren nach dem Oberbegriff des Anspruches 1 sowie eine Vorrichtung nach dem Oberbegriff des Anspruches 2.

Auf praktisch allen Gebieten der Technik und der exakten Wissenschaften sind in neuerer Zeit die Anforderungen an die Bearbeitungsgenauigkeiten bei der Herstellung der verwendeten Teile ganz erheblich gestiegen, ein Trend, der sich nach heutiger Kenntnis in Zukunft noch beschleunigt fortsetzen wird. Das ist beispielsweise bei der Fertigung von integrierten Halbleiterschaltungen im Submikronbereich und bei der Fertigung von Magnetplatten in ganz besonderem Ausmaß der Fall, da wegen der extrem starken Miniaturisierung und Erhöhung der Packungsdichte unter anderem auch außerordentlich ebene und fehlerfreie Oberflächen erforderlich sind.

Um diesen gestiegenen und auch in Zukunft ständig steigenden Anforderungen zu genügen, sind sowohl bei der Kontrolle der Ausgangsmaterialien als auch bei der Überwachung der laufenden Produktion und bei der Endabnahme extrem genaue, schnelle und möglichst automatische Messungen erforderlich, die mit den bisher bekannten Verfahren und Vorrichtungen nicht durchgeführt werden können.

So ist das Auflösungsvermögen der bisher bekannten Interferenz- oder Moiréverfahren zur gleichzeitigen Erfassung größerer Flächenbereiche für viele Anwendungen zu klein, während die bekannten hochauflösenden Interferenzverfahren zur Bestimmung des Abstandes eines punktförmigen Flächenbereiches zu einer Referenzebene beim Einsatz zur Produktionssteuerung zu umständlich und zeitraubend sind. Abgesehen davon, daß alle bekannten Interferenz- oder Moiréverfahren relativ langsam und sehr störanfällig sind, eignen sie sich im allgemeinen schlecht zur Automatisierung, so daß sie für die Messung von sich schnell ändernden, dynamischen Einflüssen ausgesetzten Flächen nur in wenigen Fällen eingesetzt werden können. In der DE-C-2 636 498 wird ein Verfahren zur interferometrischen Oberflächenmessung mit streifendem Lichteinfall beschrieben, mit dem relativ große Flächenbereiche gleichzeitig erfaßt werden können. Abgesehen von dem relativ schlechten Auflösungsvermögen — die Meßgenauigkeit liegt in der Größenordnung der Wellenlänge des verwendeten Lichtes — läßt sich das Vorzeichen der ermittelten Steigungen oder Unebenheiten ohne zusätzlichen Aufwand nicht feststellen. Zur Ermittlung des genauen Werts einer Steigung oder gar des Krümmungsradiusses einer Vertiefung sind ein Abzählen der Interferenzstreifen und Messungen der einzelnen Linienabstände erforderlich, die automatisch kaum durchführbar sind. Anschließend müssen die ermittelten Werte rechnerisch in umständlicher Weise ausgewertet werden. In der DE-C-2 636 211 wird ein interferometrisches Verfahren mit erhöhtem Auflösungsvermögen beschrieben, bei dem die Strahlung unter einem bestimmten Winkel durch ein teilreflektierendes Transmissionsgitter auf das Meßobjekt gerichtet werden muß. Abgesehen von der Kompliziertheit der erforderlichen Vorrichtungen und des relativ kleinen Gesichtsfeldes können die Vorzeichen der festgestellten Steigungen oder Unebenheiten nur mit zusätzlichem Aufwand ermittelt werden. Eine genaue Bestimmung der Größe der festgestellten Steigungen oder von Krümmungsradien sind wie bei der in der erstgenannten Veröffentlichung beschriebenen Vorrichtung nur mit erheblichem Aufwand möglich.

Andere bekannte Verfahren zur Erhöhung des Auflösungsvermögens von interferometrischen Messungen, z. B. Mehrfarbenverfahren oder Komparatorverfahren, sind umständlich, zeitraubend und ermöglichen in der Regel nur die Erfassung sehr begrenzter Gesichtsfelder.

Andere bekannte Verfahren zur punktweisen Schichtdickenmessung, beispielsweise das in der DE-A-2 616 141 beschriebene ellipsometrische Verfahren, verwenden eine unter einem großen Winkel auf die Meßfläche einfallende polarisierte Strahlung, deren Elliptizität nach der Reflexion an der Meßfläche gemessen wird. Die Auswertung erfolgt durch ein im Verlauf der reflektierten Strahlung angeordnetes $\lambda/4$-Plättchen, einen dahinter angeordneten rotierenden Analysator und einen in Fortpflanzungsrichtung der Strahlung dahinter angeordneten Lichtdetektor, dessen Ausgangssignale gemeinsam mit den Ausgangssignalen eines mit dem $\lambda/4$-Plättchen und/oder dem Analysator verbundenen Winkelcodierers einer Rechenvorrichtung zur Ermittlung der Fourier-Koeffizienten zugeführt werden. Abgesehen von dem vor allem durch den nahezu streifenden Einfall des Meßstrahls bedingten, komplizierten und viel Platz erfordernden Aufbau der benötigten Vorrichtungen sind die Messungen wegen der rotierenden Elemente und der anschließenden komplizierten Berechnungen zeitaufwendig, so daß eine Untersuchung von großen Anzahlen von auf einer oder mehreren Abtastspuren liegenden Meßpunkten, wie sie beispielsweise bei der Produktionssteuerung oder der Endabnahme bei der Herstellung von miniaturisierten Halbleiterschaltungen oder Magnetspeicherplatten erforderlich ist, nicht durchgeführt werden kann. Wegen des nahezu streifenden Lichteinfalls ist es bei diesem Verfahren auch nicht möglich, die Durchmesser der jeweils zu untersuchenden Meßpunkte beliebig klein (etwa 0,5 bis 10 $\mu$m) zu machen, was zur exakten Ebenheits- oder Rauhigkeitsmessung bei zahlreichen Anwendungen unerläßlich ist. Bedingt durch die bei allen mit großer Präzision und Geschwindigkeit bewegten Elementen unvermeidbare Abnutzung, die häufige Reparaturen und Justagen erforderlich macht sowie durch die bei derartigen Vorrichtungen unvermeidbare Empfindlichkeit gegen Verschmutzungen und Erschütterungen, sind Vorrichtungen der oben genannten Art auch bei sorgfältigster Einhaltung aller nur denkbaren Vorsichtsmaßnahmen zum laufenden Einsatz in der Massenfertigung nicht geeignet.

In der Offenlegungsschrift DE-A-2 259 244 wird ein auch für Meßzwecke verwendbares Verfahren zur Modulation des optischen Weges und ein Interferenzmodulator zur Ausübung dieses Verfahrens beschrieben, bei dem die Phasenlage eines polarisierten Strahls gegenüber der Phasenlage eines anderen polarisierten Strahls eines Zweistrahl-Interferometers periodisch verschoben wird. Zur Durchführung einer Messung wird die Phase des einen Strahls durch einen steuerbaren und gleichzeitig genau meßbaren Vorgang so lange verschoben, bis das durch Interferenz der zusammengeführten Strahlen entstehende Intensitätswechselsignal eine bestimmte Form aufweist. Diese im Grunde genommen auf einen Regelvorgang beruhende Messung ist notgedrungen langsam, die Auswertung der Meßergebnisse relativ umständlich und die Meßgenauigkeit, bedingt durch die erforderliche Berücksichtigung von mindestens drei Parametern — steuerbar veränderliche Phasenverschiebung, Wobbelfrequenz und Auswertung einer komplizierten Signalform — wenig genau.

Der Erfindung liegt die Aufgabe zugrunde, ein Verfahren sowie eine Vorrichtung anzugeben, das bzw. die bei einem im Ångströmbereich liegenden Auflösungsvermögen und bei im µs-Bereich liegenden Meßzeiten mit relativ einfachen und billigen Vorrichtungen realisiert werden können. Das zur vollständigen Automatisierung geeignete Verfahren sowie die Vorrichtung sollen ferner alle erforderlichen Werte, wie Vorzeichen und Größe der Steigungen, Vorzeichen und Größe der ermittelten Unebenheiten sowie Krümmungsradien mit geringem technischen Aufwand zur Verfügung stellen. Diese Aufgabe wird durch die im Kennzeichen des Anspruches 1 bzw. des Anspruches 2 angegebene Erfindung gelöst.

Gegenüber den bisher bekannten Meßverfahren und Meßvorrichtungen, die bei großflächigen Meßbereichen nur relativ geringe Auflösungsvermögen aufweisen, bei hohen Auflösungsvermögen aber wegen der kleinflächigen Meßbereiche und der langen erforderlichen Meßzeiten für die Untersuchung größerer Flächenbereiche nicht geeignet sind, hat die vorliegende Erfindung den Vorteil, daß sie eine Untersuchung kleinster Bereiche mit Durchmessern in der Größenordnung von 0,5 bis 10 µm mit einem im Ångströmbereich liegenden Auflösungsvermögen und mit einer Meßgeschwindigkeit von wenigen µs je Meßpunkt ermöglicht, so daß auch große Flächenbereiche durch rasterförmige Abtastung in kürzester Zeit untersucht werden können. Bedingt durch den einfachen Aufbau, die kleinen Abmessungen und die geringe Störanfälligkeit sowie durch das Fehlen bewegter Teile und der sich daraus ergebenden weitgehenden Unempfindlichkeit gegen Erschütterungen, Staub und Hitze eignet sich die erfindungsgemäße Vorrichtung besonders gut zur Überwachung von Produktionsvorgängen aller Art. Bedingt duch den einfachen Aufbau und durch das senkrechte Auftreffen der Meßstrahlen auf die zu untersuchende Fläche ist es mit dem erfindungsgemäßen Verfahren ohne weiteres möglich, in relativ großem Abstand von der Meßvorrichtung, beispielsweise in Abständen von 10 bis 100 cm, liegende Meßflächen zu untersuchen. Daher können auch in einem durchsichtigen Gefäß oder in einem mit einem durchsichtigen Fenster versehenen Gefäß ablaufende Vorgänge untersucht werden. Das erfindungsgemäße Verfahren eignet sich daher in hervorragendem Maße auch zur Untersuchung und Überwachung von bei hohen und höchsten Temperaturen, gegebenenfalls auch unter Schutzgas ablaufenden Vorgängen. Ein weiterer Vorteil der Erfindung gegenüber vergleichbaren Vorrichtungen besteht darin, daß die Größe der Meßpunkte und das Auflösungsvermögen in einfachster Weise, gegebenenfalls auch automatisch, in einem weiten Bereich verändert werden können. Da das erfindungsgemäße Verfahren auf der statistischen Auswertung von einer großen Anzahl von Nullabgleichen je Meßpunkt beruht, stören die bei praktisch allen automatischen interferometrischen Meßverfahren mit hohem Auflösungsvermögen sehr schädlichen Änderungen der Intensität der Lichtquelle oder örtliche Reflektivitätsänderungen der untersuchten Fläche praktisch nicht.

Da gemäß der Erfindung eine Aufspaltung der Meßstrahlen mit polarisationsoptischen und/oder dichroitischen Mitteln vorgesehen ist, so daß mit zwei Wellenlängen gleichzeitig zwei sich ergänzende Informationen erzeugt und automatisch ausgewertet werden können, besteht ein weiterer, ganz wesentlicher Vorteil der Erfindung ferner darin, daß durch Einsatz der an sich bekannten, mit herkömmlichen Mitteln aber nur sehr umständlich und langsam auswertbaren Zweifarben-Interferometrie, die bei den bekannten interferometrischen Verfahren bei etwa einer halben Wellenlänge der verwendeten Strahlung liegende obere Grenze des Meßbereichs bis zum 50fachen dieses Wertes und mehr verschoben werden kann.

Weiterbildungen der Erfindung sind Gegenstand der Unteransprüche.

Die Erfindung wird anschließend anhand der Fig. näher erläutert.

Es stellen dar

Fig. 1 bis 3 schematische Darstellungen von drei Ausführungsbeispielen,

Fig. 4 und 5 schematische Darstellungen der Strahlenverläufe bei Untersuchung einer Steigung bzw. einer Stufe,

Fig. 6 und 7 Kurvenverläufe zur Erläuterung des erfindungsgemäßen Verfahrens.

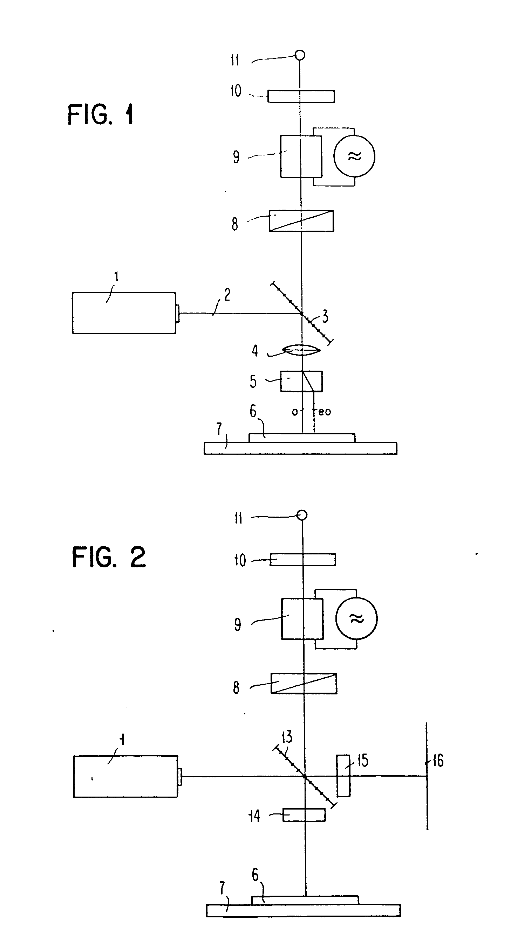

Die in Fig. 1 dargestellte Vorrichtung besteht aus einer beispielsweise als Laser ausgebildeten Lichtquelle 1 zur Erzeugung eines linear polarisierten Strahls 2, der durch einen Strahlenteiler 3, durch eine Linse 4 und einen doppelbrechenden Kristall 5 auf die Oberfläche eines auf einer Unterlage 7 angeordneten Halbleiterplättchens 6 gerichtet wird. Die an der zu untersuchenden Fläche des Halbleiterplättchens reflektierte Strahlung durchsetzt den doppelbrechenden Kristall 5, die Linse 4, den Strahlenteiler 3, einen Soleil-Babinet-Kompensator 8, einen polarisationsabhängigen Phasenschieber 9 und einen Analysator 10, von wo sie zu einem Lichtdetektor 11 gelangt.

Der von der Lichtquelle 1 ausgehende Strahl ist unter einem Winkel von 45° zur Zeichnungsebene linear polarisiert und wird im doppelbrechenden Kristall 5 in zwei parallel zueinander verlaufende und senkrecht zueinander polarisierte Strahlen o und eo aufgespalten. Nach Reflexion an der zu untersuchenden Fläche des Halbleiterplättchens 6 werden die beiden Strahlen im doppelbrechenden Kristall wieder zu einem einzigen Strahl vereinigt, der bei Vorliegen von Unebenheiten oder einer Neigung im untersuchten Bereich der Oberfläche des Halbleiterplättchens 6 aus zwei Komponenten mit unterschiedlichen Phasenlagen besteht. Die Intensitäten dieser beiden Komponenten sind, einheitliche Reflektivitäten im untersuchten Flächenbereich vorausgesetzt, einander gleich, wenn die Polarisationsrichtung des am Strahlenteiler 3 nach unten abgelenkten Strahls 2 einen Winkel von 45° mit der Hauptachse des beispielsweise aus Kalkspat bestehenden doppelbrechenden Kristalls 5 einschließt. Mit Hilfe des Soleil-Babinet-Kompensators 8 kann die Phasenlage der beiden Komponenten in Bezug aufeinander verschoben werden, um beispielsweise am Beginn einer Meßreihe die Phasendifferenz Null einzustellen. Der Phasenschieber 9 ist so ausgebildet und ausgerichtet, daß der ihn durchsetzende Strahl im allgemeinen Fall in zwei senkrecht zueinander polarisierte Komponenten aufgespalten wird, die nach Verlassen des unerregten Phasenschiebers wieder einen linear polarisierten Strahl ergeben. Wird der Phasenschieber mit einer eine Phasenverschiebung von $\frac{\lambda}{2}$ bewirkenden Wechselspannung angesteuert, so werden die Phasenlagen der beiden senkrecht zueinander linear polarisierten Komponenten in unterschiedlicher Weise verzögert, so daß der den Phasenschieber verlassende Strahl mit der Periode der erregenden Wechselspannung periodisch und kontinuierlich aus einem in einer bestimmten Richtung linear polarisierten Strahl in einen elliptisch polarisierten und anschließend wieder in einen senkrecht zur ersten Richtung linear polarisierten Strahl übergeht. Das hat zur Folge, daß die Intensität des den Analysator 10 verlassenden Strahles einen sinusförmigen Verlauf aufweist, der die gleiche Frequenz und im Falle einer bestimmten Orientierung des Analysators 10 auch die gleiche Phasenlage wie die den Phasenschieber 9 erregende Wechselspannung hat.

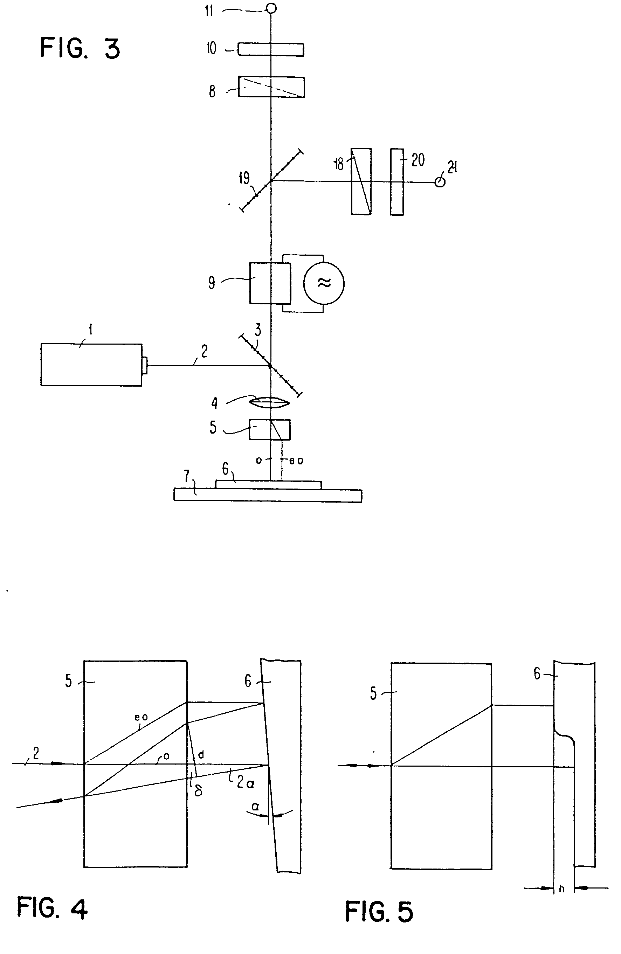

Weist die Objektoberfläche, beispielsweise wie in Fig. 4 dargestellt, eine Neigung $\alpha$ auf, so werden die den doppelbrechenden Kristall 5 verlassenden, mit o und eo bezeichneten ordentlichen und außerordentlichen Strahlen bei der Reflexion an der Objektfläche um einen Winkel 2$\alpha$ von der Einfallsrichtung abgelenkt, so daß die sich ergebende Phasendifferenz durch die Beziehung

$$\Phi_M = \frac{4\pi}{\lambda} \, d \cdot \alpha \qquad (1)$$

wiedergegeben wird, wobei $\lambda$ die Wellenlänge der verwendeten Strahlung $\alpha$ die Neigung der Oberfläche des Objekts 6 und d der Abstand zwischen den Strahlen o und eo ist.

Weist der von den Strahlen beaufschlagte Bereich jedoch, wie beispielsweise in Fig. 5 schematisch dargestellt, eine Stufe mit der Höhe h auf, so entsteht eine Phasenverschiebung, die durch die Beziehung

$$\Phi_M = \frac{4\pi}{\lambda} \, h \qquad (2)$$

definiert ist.

Liegt zwischen der Phasenlage des ordentlichen und des außerordentlichen Strahls eine Verschiebung vor, so wird der die obere Fläche des doppelbrechenden Kristalls 5 verlassende Strahl nicht mehr linear, sondern elliptisch polarisiert sein und im Falle eines nicht erregten Phasenschiebers 9 im gleichen Zustand auf den Analysator 10 auftreffen, so daß nicht mehr dieselbe Lichtintensität wie im Falle eines linear polarisierten Strahls zum Lichtdetektor 11 gelangt. Bei Erregung des Phasenschiebers 9 durch die $\lambda/2$-Wechselspannung werden die Phasenlagen der beiden, den ordentlichen und den außerordentlichen Strahl entsprechenden Komponenten periodisch in Bezug aufeinander verschoben, so daß sich in jeder Periode mindestens einmal der Zustand ergibt, daß die durch das Objekt erzeugte Phasenverschiebung $\Phi_M$ gleich der im Phasenschieber 9 erzeugten Phasenverschiebung $\Phi_P$ ist.

Verändert sich $\Phi_M$ zwischen den Werten +$\pi$ und −$\pi$, was eine Drehung der linear polarisierten Strahlung aus einer ersten Richtung über eine Vielzahl elliptischer Zwischenzustände in eine zur ersten Richtung senkrecht liegende zweite Richtung und umgekehrt zur Folge hat, so gilt für die resultierende Phasenlage $\Phi_G$ die Beziehung:

$$\Phi_G = \Phi_P + \Phi_M. \qquad (3)$$

Die Intensität des den Analysator 10 verlassenden Strahles wird dann durch die Beziehung

$$I = \frac{1}{2}\, lo\,(1 - \cos \cdot \varPhi_G) \qquad (4)$$

wiedergegeben, wobei lo die maximale den Analysator verlassende Intensität ist.

Ein entsprechendes elektrisches Signal wird daher auch am Ausgang des Lichtdetektors 11 auftreten.

Aus den beiden oben wiedergegebenen Beziehungen ergibt sich

$$I = \frac{1}{2}\, I_O\,[1 - \cos \cdot (\varPhi_P + \varPhi_M)] \qquad (5)$$

wobei $I_0$ die Intensität ist, die im Falle einer Übereinstimmung der Durchlaßrichtung des Polarisators mit der Richtung der linear polarisierten Strahlung zum Lichtdetektor 11 gelangt, wobei $\varPhi_M$ die gemessene Phasendifferenz und $\varPhi_P$ die periodische im Phasenschieber 9 erzeugte Phasendifferenz ist.

Nach der Beziehung (5) sind die Nullstellen der resultierenden Phasenlage $\varPhi_G$ gegeben durch

$$\varPhi_G = \varPhi_P + \varPhi_M = 2\,m\,\pi\ (m = 0, \pm 1, \pm 2 \ldots)$$
$$\qquad (6)$$

Für die Werte $|\varPhi_M| < \pi$ werden die Meßwerte eindeutig definiert. Mit der Einschränkung

$$|\varPhi_P + \varPhi_M| < 2\,\pi \qquad (7)$$

ist die Anzahl der Nullstellen reduziert auf eine, nämlich

$$\varPhi_P + \varPhi_M = 0 \qquad (8)$$

daher

$$\varPhi_P = -\varPhi_M. \qquad (9)$$

Aufgrund dieser Beziehung ist es möglich, die durch das Objekt bedingte Phasendifferenz $\varPhi_M$ zu bestimmen, indem die durch den Modulator erzeugte Phasendifferenz $\varPhi_P$ bis zum Auftreten eines Minimums der Intensität der den Analysator 10 durchsetzenden Strahlung kontinuierlich verändert wird. Da die Phasenverschiebung $\varPhi_P$ eine lineare Funktion der an den Phasenschieber 9 gelegten Spannung V ist, gilt die Beziehung

$$\varPhi_P = k\,V \qquad (10)$$

wobei k eine elektro-optische Konstante und V die den Phasenschieber 9 erregende Spannung ist.

Wird die an den Phasenschieber 9 angelegte Spannung bis zum Auftreten von $I = I_{min}$ verändert, so folgt aus (9) und (10)

$$\varPhi_M = -k\,V_m \qquad (11)$$

somit ist die Spannung $V_m$ bei der die Intensität der den Analysator 10 durchsetzenden Strahlung und somit auch die am Ausgang des Lichtdetektors 11 auftretende Spannung ein Minimum ist ein Maß für die zu messende, durch das Objekt erzeugte Phasendifferenz $\varPhi_M$. Die Vorzeichen + oder − der gemessenen Spannung $V_m$ geben an, ob die Neigung oder die Stufe in positiver oder negativer Richtung verläuft.

Da eine manuelle Änderung der den Modulator 9 erregenden Spannung umständlich ist und zu ungenauen Ergebnissen führen würde, wird gemäß der Erfindung ein automatisches Verfahren beschrieben, bei dem die Größe der den Modulator erregenden Spannung periodisch gemäß der Beziehung

$$V = V_{\lambda/2} \cdot \cos \cdot \omega\,t \qquad (12)$$

geändert wird, wobei $V_{\lambda/2}$ die Halbwellenspannung, $\omega$ die Modulationsfrequenz und t die Zeit darstellen.

Aus der oben genannten Beziehung ergibt sich eine Phasenmodulation gemäß der Beziehung

$$\varPhi_M = k \cdot V_{\lambda/2}\cos \omega\,t = \pi\cos \omega\,t \qquad (13)$$

Gemäß der Beziehung (11) und (13) ändert sich somit die durch den Lichtdetektor gemessene Intensität gemäß der Beziehung

$$I/I_0 = \left[ \frac{1}{2} - \frac{1}{2}\,\cos \cdot (\pi \cdot \cos \cdot \omega\,t + \varPhi_M) \right] \cdot$$
$$\qquad (14)$$

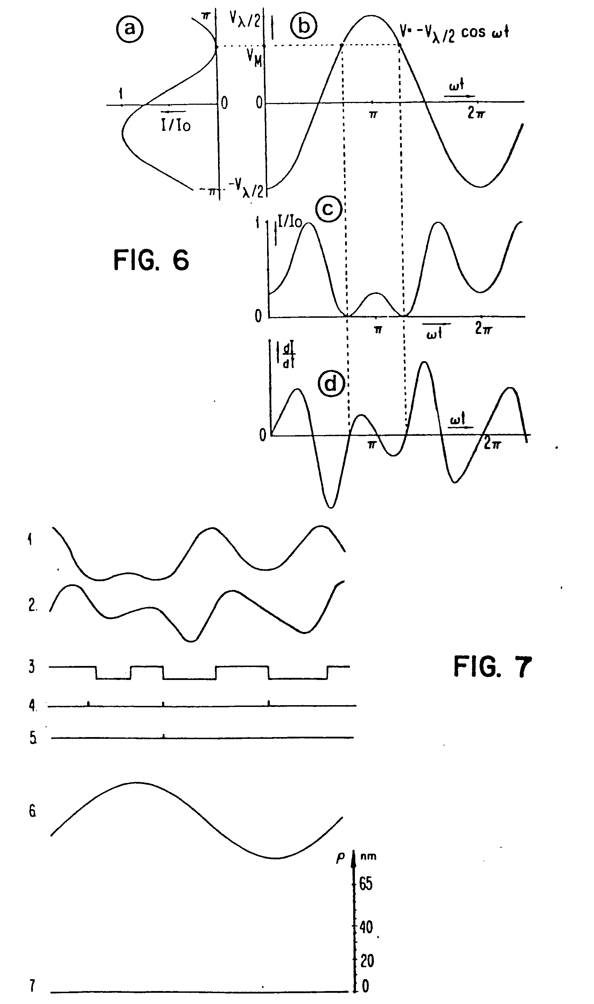

Die in Fig. 6 dargestellten Kurven wurden für eine Phasendifferenz von $\varPhi_M = -0{,}67\pi$ aufgenommen. Die in dieser Fig. mit

a)   bezeichnete Kurve stellt den Intensitätsverlauf als Funktion der Phasendifferenz $\varPhi_P$ im Bereich $-\pi < \varPhi_P < \pi$ dar. Die in Fig. 6 mit

b)   bezeichnete Kurve stellt den Verlauf der den Phasenschieber 9 erregenden Spannung als Funktion der Zeit dar. Diese Kurve ist der Phasenmodulationskurve äquivalent. Die in Fig. 6 mit

c)   bezeichnete Kurve stellt den Intensitätsverlauf der mit dem Lichtdetektor 11 gemessenen Strahlung und die mit

d)   bezeichnete Kurve die Ableitung der mit c) bezeichneten Kurve dar.

In Fig. 7 wird das Verfahren erläutert, mit dem die durch die in Fig. 1 beschriebene Vorrichtung erzielten Signale in Angaben über die am Objekt gemessenen Größen umgewandelt werden. Die Kurve in der ersten Zeile dieser Fig. stellt den Verlauf des Verhältnisses zwischen der jeweils am Ausgang des Lichtdetektors 11 gemessenen Spannung zu der an diesem Ausgang auftretenden Maximalspannung dar. Die Kurve in der zweiten Zeile stellt den Verlauf der am Ausgang einer Differenzierschaltung auftretenden Spannung dar, deren Eingang ein Spannungsverlauf gemäß der in der Zeile 1 dargestellten Kurve zugeführt wird. Die am Ausgang der Differenzierschaltung auftretende Spannung, deren Verlauf durch die in Zeile 2 dargestellte Kurve wiedergegeben wird, wird einem vorzugsweise als Schmitt-Trigger ausgebildeten Multivibrator zugeführt, an dessen Ausgang die in Zeile 3 dargestellte Rechteckspannung erscheint. In einem dem Schmitt-Trigger nachgeschalteten monostabilen Multivibrator werden die negativen Flanken der in der dritten Zeile dargestellten Rechteckspannung in Nadelimpulse (Zeile 4) umgewandelt, von denen jeweils der mittlere der drei jeder Periode der in Zeile 1 dargestellten Kurve entsprechende Nadelimpuls mit Hilfe eines von der durch die Quelle 9 erzeugten $\lambda/2$-Spannung abgeleiteten Tastimpulses herausgegriffen wird. Dieser jeweils zeitlich mit einem der beiden Hauptminima dem der in Zeile 1 dargestellten Kurve zusammenfallende Nadelimpuls wird gemeinsam mit einer von der Spannungsquelle 9 gelieferten Sinusspannung (Zeile 6) einer Abtast- und Halte-Schaltung zugeführt und so verknüpft, daß der jeweils zum Zeitpunkt des Auftretens des Nadelimpulses vorliegende Wert der Sinusspannung (Zeile 6) festgehalten und bis zum Auftreten des nächsten Nadelimpulses gespeichert wird. Die Höhe der in Zeile 7 dargestellten Gleichspannung stellt somit ein der jeweils gemessenen Unebenheit oder Steigung analoges Signal dar. Die Anordnung ist so getroffen, daß die am Ausgang der Verarbeitungsschaltung jeweils vorliegenden elektrischen Analogsignale (Zeile 7) jeweils der im untersuchten Flächenbereich vorliegenden Unebenheit oder Steigung entsprechen. Die genauen Werte der ermittelten Steigungen oder Höhen von Unebenheiten können unmittelbar auf einem entsprechend geeichten elektrischen Meßgerät oder einem Oszillographenschirm abgelesen werden. Im Falle der Abtastung von regelmäßig gekrümmten Flächen können diese Geräte auch in Werten von Krümmungsradien geeicht werden.

Da für die meisten Anwendungen nicht nur ein ganz bestimmtes Auflösungsvermögen, sondern auch die Größe des jeweils durch einen Meßvorgang erfaßten Meßbereiches von Bedeutung ist, wird vorgesehen, eine größere Anzahl von doppelbrechenden Kristallen 5 mit unterschiedlichen doppelbrechenden Eigenschaften und/oder Dicken auf einem verschiebbaren Träger entlang einer Geraden oder entlang eines Kreises auf einem drehbar gelagerten Revolver anzuordnen, so daß gemäß den jeweils vorliegenden Anforderungen an das Auflösungsvermögen und den Durchmesser des bei einem Meßvorgang zu erfassenden Bereiches der Abstand zwischen dem ordentlichen Strahl o und dem außerordentlichen Strahl eo in den erforderlichen Grenzen geändert werden kann. Für sehr schnelle Änderungen des Abstandes zwischen dem ordentlichen und dem außerordentlichen Strahl kann es zweckmäßig sein, anstelle des doppelbrechenden Kristalls 5 einen an sich bekannten digitalen elektro-optischen Lichtablenker vorzusehen, mit dem der Abstand zwischen den beiden Strahlen nahezu mit Lichtgeschwindigkeit in beliebig vielen Schritten geändert werden kann.

Da der Durchmesser eines Laserstrahls nur durch das Auflösungsvermögen der verwendeten fokussierenden optischen Elemente begrenzt ist, ist es ohne weiteres möglich, die Messungen mit Strahlen von Durchmessern zwischen 0,5 µm bis einigen mm durchzuführen. Entsprechend können die Abstände zwischen dem ordentlichen und dem außerordentlichen Strahl zwischen 0,5 µm und einigen cm geändert werden. Da bei Strahlendurchmessern und Abständen zwischen den ordentlichen und den außerordentlichen Strahlen von einigen 100 µm fokussierende optische Elemente nicht erforderlich sind, kann der Abstand zwischen dem doppelbrechenden Kristall bzw. dem Ausgang eines elektro-optischen digitalen Lichtablenkers und dem Meßobjekt ohne weiteres bis in die Größenordnung von einem Meter gewählt werden.

Da bei Verwendung eines mit einer Frequenz von einigen MHz erregten elektro-optischen Modulators 9 ein aus mehreren Einzelmessungen, deren Ergebnisse mit einer einfachen Schaltung statistisch gemittelt werden können, bestehender Meßvorgang in etwa 1 µs durchgeführt werden kann, eignet sich das beschriebene Verfahren bzw. die Vorrichtung insbesondere auch für Ebenheitsmessungen an sehr schnell bewegten Teilen, beispielsweise an mit der üblichen Arbeitsgeschwindigkeit von 3000 Umdrehungen pro Minute rotierenden Magnetspeicherplatten. Werden je Meßpunkt mehrere Einzelmessungen vorgenommen und ihre Ergebnisse statistisch gemittelt, so können während des Meßvorganges auftretende Vibrationen oder sonstige Störungen weitgehend unschädlich gemacht werden. Dabei kann beispielsweise die gesamte Plattenfläche in wenigen Sekunden durch eine kontinuierliche Verschiebung der Vorrichtung in Richtung des Plattenradius gemessen werden. Zur extrem schnellen Abtastung von Halbleiterplättchen während und nach den einzelnen Produktionsschritten kann es zweckmäßig sein, vor dem doppelbrechenden Kristall 5 einen mit einer Frequenz von 1 MHz betriebenen elektro-optischen digitalen oder analogen Lichtablenker vorzusehen oder anstelle des doppelbrechenden Kristalls 5 einen einen Doppelstrahl ablenkenden Lichtablenker vorzusehen.

Das in Fig. 2 dargestellte Ausführungsbeispiel besteht aus einem Michelson-Interferometer, das gemäß dem erfindungsgemäßen Verfahren betrieben wird. Ein von einer beispielsweise als Laser ausgebildeten Lichtquelle 1 ausgehender linear polarisierter Lichtstrahl 2, dessen Polarisationsebene mit der Zeichnungsebene einen Winkel von 45° einschließt, wird auf einen polarisierenden Strahlenteiler 13 gerichtet, der die in einer Richtung polarisierte Komponente dieses Strahls durch ein $\lambda/4$-Plättchen 14 auf die obere Fläche eines auf einer Unterlage 7 angeordneten Halbleiterplättchens 6 richtet, während die senkrecht zur ersten Komponente des Strahls 2 linear polarisierte Komponente den polarisierenden Strahlenteiler 13 durchsetzt und durch ein $\lambda/4$-Plättchen 15 auf eine reflektierende Referenzfläche 16 auftrifft. Die Polarisationsrichtungen der am Halbleiterplättchen 6 bzw. an der reflektierenden Referenzfläche 16 reflektierten Komponenten werden, da sie die Plättchen 14 bzw. 15 jeweils zweimal durchsetzen um 90° gedreht, so daß die vom Halbleiterplättchen 6 kommende Komponente den Strahlenteiler 13 durchsetzt, während die von der reflektierenden Referenzfläche kommende Komponente am Strahlenteiler 13 in Richtung auf die aus den Elementen 8, 9, 10 und 11 bestehende Anordnung abgelenkt wird, deren Wirkungsweise im Zusammenhang mit der Beschreibung der Fig. 1 ausführlich erläutert wurde.

Fig. 3 stellt eine Ausführungsform dar, mit der der Meßbereich senkrecht zur Meßfläche des erfindungsgemäßen Verfahrens nach oben mindestens um das 50fache erweitert werden kann. Mit den in den Fig. 1 und 2 dargestellten Vorrichtungen können zwar sehr genaue Messungen in Bruchteilen von µs vorgenommen werden, die obere Grenze des Meßbereichs liegt aber wie bei praktisch allen optischen Meßverfahren bei etwa der halben Wellenlänge der verwendeten Strahlung. Zur Vergrößerung des Meßbereichs der in den Fig. 1 und 2 dargestellten Vorrichtungen wird unter Verwendung der an sich bekannten Mehrfarbeninterferometrie von der Tatsache Gebrauch gemacht, daß bei Anwendung des erfindungsgemäßen Verfahrens die Aufspaltung eines Strahles in zwei Komponenten nicht nur durch polarisationsoptische oder dichroitische Elemente möglich ist, sondern daß diese Elemente auch gemeinsam und gleichzeitig in einer einzigen Meßvorrichtung verwendet werden können. Dadurch wird es mit dem erfindungsgemäßen Verfahren möglich, mit einer einzigen Vorrichtung, ohne ins Gewicht fallenden Mehraufwand, gleichzeitig zwei Messungen mit voneinander verschiedenen Wellenlängen durchzuführen. Durch eine einfache Verknüpfung der in Form von Spannungen in analoger Form gleichzeitig vorliegenden Meßergebnisse kann der Meßbereich theoretisch um Zehnerpotenzen nach oben erweitert werden. Wegen des hohen Auflösungsvermögens der beiden gleichzeitig durchgeführten Einzelmessungen können noch relativ große Periodizitäten des durch Überlagerung der beiden Einzelmeßwerte entstehenden Signals mit großer Genauigkeit ermittelt werden, so daß der Meßbereich ohne besonderen Aufwand von einer unteren Grenze von wenigen nm bis zu einer oberen Grenze von 30 µm ausgedehnt werden kann. Wegen der einfachen Verknüpfung der durch die beiden gleichzeitig durchgeführten Einzelmessungen erhaltenen Werte können auch die Ergebnisse der Messungen mit erweitertem Meßbereich in Bruchteilen von Mikrosekunden erhalten werden.

Der von einer vorzugsweise als Laser ausgebildeten Lichtquelle 1 ausgehende, die Wellenlänge $\lambda1$ und $\lambda2$ enthaltende, unter einem Winkel von 45° zur Zeichnungsebene linear polarisierte Strahl 2 wird an einem Strahlenteiler 3, durch eine Linse 4 und einen doppelbrechenden Kristall 5, indem er in zwei zueinander senkrecht polarisierte Strahlen o, eo aufgespalten wird, auf die obere Fläche eines auf einer Unterlage 7 liegenden Halbleiterplättchens 6 gerichtet. Die am Halbleiterplättchen reflektierten ordentlichen und außerordentlichen Komponenten werden im doppelbrechenden Kristall wieder zu einem einzigen Strahl zusammengefaßt, dessen dem ordentlichen und dem außerordentlichen Strahl entsprechende Komponenten im Falle einer vollkommen ebenen und senkrecht zu den Meßstrahlen liegenden Meßfläche phasengleich sind. Sie durchsetzen anschließend die Linse 4, den Strahlenteiler 3 und einen polarisationsabhängigen und mit einer Wechselspannung ansteuerbaren Phasenschieber 9, von wo sie zu einem dichroitischen Strahlenteiler 19 gelangen, der die die Wellenlänge $\lambda1$ enthaltende Strahlung durch einen Soleil-Babinet-Kompensator 8 und einen Analysator 10 zu einem Lichtdetektor 11 durchläßt. Die die Wellenlänge $\lambda2$ aufweisende Strahlung wird am Strahlenteiler 19 nach rechts reflektiert und gelangt durch einen zweiten Soleil-Babinet-Kompensator 18 und einen Polarisator 20 zu einem zweiten Lichtdetektor 21. Die Funktion dieser Vorrichtung ergibt sich aus der Beschreibung der Fig. 1. Der Unterschied zwischen beiden Vorrichtungen besteht im wesentlichen darin, daß der den Phasenschieber 9 verlassende Strahl bei der Vorrichtung nach Fig. 1 unmittelbar einem Analysator und einem Lichtdetektor zugeführt wird, während bei der Vorrichtung nach Fig. 3 der den Phasenschieber 9 verlassende Strahl mit Hilfe des dichroitischen Strahlenteilers 19 räumlich in seine beiden Farbkomponenten aufgespalten wird, die jeweils über einen zugeordneten Analysator zu den Lichtdetektoren 11 bzw. 21 gelangen. Es ist selbstverständlich auch möglich, bei Verwendung polychroitischer Elemente Strahlungen mit mehr als zwei Wellenlängen zu verwenden.

Bei der Diskussion der Wirkungsweise der in Fig. 1 dargestellten Vorrichtung ergab sich aus der Beziehung

$$\Phi_G = \Phi_P + \Phi_M = 2n\pi \, (n = 0, \pm 1, \pm 2 \ldots)$$

$$(6)$$

daß $\Phi_M$ nur dann eindeutig bestimmt ist, wenn die Interferenzordnung n bekannt ist. In der Praxis kann das nur bei speziellen Anwendungen vorausgesetzt werden. Im allgemeinen besteht daher die Einschränkung, daß Höhenunterschiede nur bis höchstens $\lambda/2$ gemessen werden können.

Die Einschränkung verliert ihre Gültigkeit, wenn die Messung gleichzeitig oder zeitlich nacheinander mit zwei verschiedenen Lichtwellenlängen $\lambda_1$ und $\lambda_2$ durchgeführt wird. Für die beiden Wellenlängen gilt dann nach den Beziehungen (1) und (6)

$$\Phi_{R1} = \frac{4\pi}{\lambda 1} \, ds = \Phi_{M1} + 2n\pi \quad (n = 0, 1, 2, 3 \ldots)$$

$$(15)$$

und

$$\Phi_{R2} = \frac{4\pi}{\lambda 2} \, ds = \Phi_{M2} + 2m\pi \quad (m = 0, 1, 2, 3 \ldots)$$

$$(16)$$

die die für jede einzelne Wellenlänge gemessenen Phasenwerte darstellen mit den zu messenden Phasendifferenzen

$$\frac{\Phi_{M1} < 2\pi}{\Phi_{M2} < 2\pi} \qquad (17)$$

Die Beziehungen (15) und (16) erlauben mit den Meßwerten nach (17) keine eindeutige Bestimmung von ds, wenn die Ordnungen m und n unterschiedlich und unbekannt sind. Die unbekannte Höhe ds kann jedoch eindeutig bestimmt werden, wenn die Interferenzordnungen m und n gleich sind, d. h.

$$m = n \qquad (18)$$

durch eine Kombination der Beziehungen (15), (16) und (18) folgt

$$ds = \frac{\Phi_{M1} - \Phi_{M2}}{4\pi \left( \dfrac{1}{\lambda 1} - \dfrac{1}{\lambda 2} \right)} \qquad (19)$$

wobei $\Phi_{M1}$ die Phasendifferenz gemessen mit $\lambda 1$ und $\Phi_{M2}$ die Phasendifferenz gemessen mit $\lambda 2$ und $\lambda_{1,2}$ die Lichtwellenlängen sind.

Die Beziehung (18) führt zu einer neuen Definition des Meßbereiches.

Aus der Beziehung (17) ergibt sich

$$\Phi_{M1} - \Phi_{M2} < 2\pi \qquad (20)$$

daraus folgt für ds nach (19) die Einschränkung

$$ds < \frac{2\pi}{4\pi} : \left( \frac{1}{\lambda 1} - \frac{1}{\lambda 2} \right) \quad \lambda 2 > \lambda 1$$

$$(21)$$

oder

$$ds < \frac{\lambda 1 \cdot \lambda 2}{2(\lambda_2 - \lambda_1)}$$

Aus dieser Beziehung ergibt sich der Meßbereich ds, für den die Voraussetzung (18) zutrifft. In diesem Meßbereich liefert die Messung mit zwei Wellenlängen $\lambda 1$ und $\lambda 2$ einen eindeutigen Wert ds, der unabhängig ist von der Interferenzordnung n. Die Größe dieses Meßbereichs hängt von der Wahl der Wellenlängen $\lambda 1$ und $\lambda 2$ ab. Sie ergibt sich ohne weiteres aus den Beziehungen (21).

So gilt beispielsweise für $\lambda 1 = 472,7$ nm, $\lambda 2 = 476,5$ nm ein Meßbereich ds $= 30$ μm. Dieser Meßbereich deckt bereits die Meßanforderungen in der Halbleiterfabrikation ab. Die Messungen können entweder nacheinander oder mit der in Fig. 3 dargestellten Vorrichtung gleichzeitig durchgeführt werden.

Es ist selbstverständlich auch möglich, anstelle des in den Fig. 1, 2 und 3 beschriebenen elektro-optischen Phasenverschiebers auch andere geeignete Modulatoren, beispielsweise magneto-optische oder piezo-optische Phasenschieber zu verwenden. Das erfindungsgemäße Verfahren und die erfindungsgemäße Vorrichtung eignet sich nicht nur zur Messung von Neigungen und Unebenheiten, sondern auch zur Messung von Schichtdicken und Brechungsindizes.

**Patentansprüche**

1. Verfahren zur Messung der Ebenheit, der Rauhigkeit oder des Krümmungsradius einer Meßfläche (6), bei dem

a) einer von zwei unterschiedlich polarisierten Teilstrahlen auf einen Punkt der Meßfläche und der andere Teilstrahl entweder auf einen benachbarten Punkt der Meßfläche oder auf eine Referenzfläche gerichtet wird,

b) die beiden Teilstrahlen zu einem Strahlenbündel überlagert werden,

c) die Phase eines der Teilstrahlen relativ zu der des anderen entsprechend einem modulierenden Signal geändert wird,

d) das Strahlenbündel einer Polarisationsanalyse unterworfen wird,

dadurch gekennzeichnet, daß

e) die Zeitpunkte, zu denen eine von der Meßfläche bewirkte Phasenverschiebung zwischen den beiden Teilstrahlen durch die Modulation kompensiert wird, aus dem nach der Polarisationsanalyse erhaltenen Intensitätsverlauf des Strahlenbündels bestimmt werden und

f) die Werte des zu diesen Zeitpunkten vorliegenden modulierenden Signals festgehalten werden.

2. Vorrichtung zur Messung der Ebenheit, der Rauhigkeit oder des Krümmungsradius einer Meßfläche (6) mit

a) einer Lichtquelle (1) zur Erzeugung zweier unterschiedlich polarisierter Teilstrahlen, von denen einer auf einen Punkt der Meßfläche (6) und der andere auf einen benachbarten Punkt oder auf eine Referenzfläche gerichtet ist,

b) einer Einrichtung (5) zur Überlagerung der beiden von der Meßfläche (6) und/oder der Referenzfläche ausgehenden Teilstrahlen zu einem Strahlenbündel,

c) einem Modulator (9) zur Modulation der Phase des einen Teilstrahls relativ zu der des anderen entsprechend dem Verlauf eines dem Modulator zugeführten Steuersignals,

d) einem Analysator (10) im Wege des überlagerten Strahlenbündels sowie

e) einem photoelektrischen Wandler (11) hinter dem Analysator,

dadurch gekennzeichnet, daß

f) der Modulator als Polarisationsmodulator (9) ausgebildet und im Wege des überlagerten Strahlenbündels angeordnet ist,

g) eine vom Ausgangssignal des Wandlers (11) beaufschlagte Triggerschaltung vorgesehen ist zur Erzeugung von Triggersignalen jeweils zu den Zeitpunkten, zu denen eine von der Meßfläche (6) bewirkte Phasenverschiebung zwischen den beiden Teilstrahlen durch den Modulator (9) kompensiert wird sowie

h) eine jeweils von den Triggersignalen zur Aufnahme der Momentanwerte des Steuersignals geöffnete Speicherschaltung vorgesehen ist.

3. Vorrichtung nach Anspruch 2, dadurch gekennzeichnet, daß vor dem Polarisationsmodulator (9) im Wege des überlagerten Strahlenbündels ein einstellbarer Phasenkompensator (8) angeordnet ist.

4. Vorrichtung nach Anspruch 2, dadurch gekennzeichnet,
daß sich beide Teilstrahlen jeweils aus mindestens zwei Strahlungsanteilen unterschiedlicher Wellenlänge zusammensetzen,
daß hinter dem Polarisationsmodulator (9) eine optische Einrichtung (19) zur räumlichen Aufspaltung des aus dem Polarisationsmodulator (9) austretenden Strahlenbündels in eine den Wellenlängen entsprechende Zahl von jeweils eine dieser Wellenlängen besitzenden Hilfsstrahlenbündeln angeordnet ist,
daß in jedem der Hilfsstrahlenbündel der Reihe nach jeweils ein Phasenkompensator (8, 18), ein Analysator (10, 20) und ein photoelektrischer Wandler (11, 21) vorgesehen sind, und
daß die Triggerschaltung mit jedem der Wandler (11, 21) zur Aktivierung der Speicherschaltung für die Aufnahme derjenigen Werte des Steuersignals verbunden ist, bei denen sich für jeweils eine der Wellenlängen eine Kompensation der durch die Meßfläche sowie den Modulator bedingten Phasenverschiebungen ergibt.

**Claims**

1. Method for measuring the planeness, the roughness or the radius of curvature of a measuring surface (6), comprising,

a) directing one of two component beams polarized in different directions relative to each other onto one point of said measuring surface and the other component beam either either onto an adjacent point of said measuring surface or onto a reference surface,

b) recombining said two component beams into one beam,

c) changing the phase of one of said component beams relative to that of the other component beam in accordance with a modulating signal,

d) subjecting said recombined beam to a polarization analysis,

characterized in that

e) the times at which compensation of a phase shift induced by said measuring surface between said two component beams takes place are determined as a function of the intensity curve of the beam abtained after polarization analysis, and

f) the values of the modulating signal present at said times are stored.

2. Arrangement for measuring the planeness, the roughness or the radius of curvature of a measuring surface (6), comprising

a) a light source (1) for generating two component beams polarized in different directions relative to each other, one beam of which is directed onto one point of said measuring surface (6) and the other beam is directed onto an adjacent point or onto a reference surface,

b) means (5) for recombining into one beam said two component beams reflected from said measuring surface (6) and/or said reference surface,

c) a modulator (9) for modulating the phase of one component beam relative to that of the other component beam according to a control signal applied to said modulator,

d) an analyzer (10) in the path of said recombined beam, as well as

e) a photoelectric transducer (11) behind said analyzer,

characterized in that

f) said modulator is designed as a polarization modulator (9) and arranged in the path of said recombined beam,

g) a trigger circuit is provided to which the output signal of said transducer (11) is applied and which generates trigger signals at times at which the phase shift induced by said measuring surface (6) between said two component beams is compensated for by said modulator (9), as well as

h) a storage circuit is provided which is opened by the trigger signals to accommodate the instantaneous values of the control signal.

3. Arrangement according to claim 2, characterized in that an adjustable phase compensator (8) is arranged in front of said polarization modulator (9) in the path of said recombined beam.

4. Arrangement according to claim 2, characterized in that said two component beams are made up of at least two beam constituents of different wavelenght, that behind said polarization modulator (9) optical means (19) are provided for spatially splitting up the beam exiting from said polarization modulator (9) into a number of auxiliary beams corresponding to said wavelengths and each having one of said wavelengths, that each auxiliary beam comprises in the following order one phase compensator (8, 18), one analyzer (10, 20) and one photoelectric transducer (11, 21), and that said trigger circuit is connected to each of said transducer (11, 21) for activating said storage circuit to accommodate those values of the control signals at which one of said wavelengths is compensated for by the phase shifts induced by said measuring surface as well as said modulator.

## Revendications

1. Procédé pour mesurer la planéité, la rugosité ou le rayon de courbure d'une surface à mesurer (6), dans lequel:

a) l'un de deux faisceaux partiels polarisés de manière différente est dirigé sur un point de la surface à mesurer alors que l'autre faisceau partiel est dirigé sur un point avoisinant de la surface à mesurer ou sur une surface de référence,
b) les deux faisceaux partiels sont superposés pour former un seul faisceau,
c) la phase d'un des faisceaux partiels par rapport à celle de l'autre faisceau partiel est variée selon un signal modulateur,
d) le faisceau est soumis à une analyse de polarisation,

caractérisé en ce que

e) les temps auxquels on compense par la modulation un décalage de phase, dû à la surface à mesurer, entre les deux faisceaux partiels, sont déterminés en fonction de la courbe d'intensité du faisceau obtenu par l'analyse de polarisation, et
f) les valeurs du signal modulateur obtenu à ces temps sont enregistrées.

2. Appareil pour mesurer la planéité, la rugosité ou le rayon de courbure d'une surface à mesurer (6), comprenant

a) une source lumineuse (1) pour produire deux faisceaux partiels polarisés de manière différente, l'un étant dirigé sur un point de la surface à mesurer (6) alors que l'autre est dirigé sur un point avoisinant ou sur une surface de référence,
b) un dispositif (5) pour superposer les deux faisceaux partiels, émis par la surface à mesurer (6) et/ou par la surface de référence, en un seul faisceau,
c) un modulateur (9) pour moduler la phase de l'un des faisceaux partiels par rapport à l'autre en fonction de la variation d'un signal de commande appliqué au modulateur,
d) un dispositif d'analyse (10) dans le trajet du faisceau superposé, et
e) un transducteur photoélectrique (11) derrière le dispositif d'analyse,

caractérisé en ce que

f) le modulateur est conçu comme modulateur de polarisation (9) et est disposé dans le trajet du faisceau superposé,
g) une bascule bistable est prévue à laquelle on applique le signal de sortie du transducteur (11) pour obtenir des signaux de basculement aux temps auxquels un décalage de phase provoqué entre les deux faisceaux partiels par la surface à mesurer (6), est compensé par le modulateur (9), et
h) un circuit de mémoire est prévu qui est ouvert par les signaux de basculement pour enregistrer les valeurs instantanées du signal de commande.

3. Appareil selon la revendication 2, caractérisé en ce qu'un compensateur de phase ajustable (8) est disposé devant le modulateur de polarisation (9) dans le trajet du faisceau superposé.

4. Appareil selon la revendication 2, caractérisé en ce que les deux faisceaux partiels sont composés chacun d'au moins deux constituants de faisceaux de longueurs d'onde différentes, en ce que derrière le modulateur de polarisation (9) est disposé un dispositif optique (19) pour la division spatiale du faisceau sortant du modulateur de polarisation (9) en un nombre de faisceaux auxiliaires en rapport avec les longueurs d'onde, chacun ayant une de ces longueurs d'onde, en ce que dans chaque faisceau auxiliaire est prévu, dans l'ordre, un compensateur de phase (8, 18), un dispositif d'analyse (10, 20) et un transducteur photoélectrique (11, 21), et en ce que la bascule bistable est connectée à chacun des transducteurs (11, 21) pour activer le circuit de mémoire afin de recevoir celles des valeurs du signal de commande qui provoquent pour au moins une des longueurs d'onde une compensation du décalage de phase due à la surface à mesurer ainsi qu'au modulateur.

# FIG. 1

# FIG. 2

FIG. 3

FIG. 4

FIG. 5

FIG. 6

FIG. 7